# EUROPEAN PATENT APPLICATION

(11) **EP 2 801 964 A1**
(43) Date of publication of application: **12.11.2014**
(21) Application number: 14165340.2
(22) Date of filing: 21.04.2014
(51) Int. Cl.: G08G 5/00

(54) **System and method for displaying rate-of-climb on an avionics vertical speed indicator**

(30) Priority: 08.05.2013 US 201313889887
(71) Applicant: Honeywell International Inc., Morristown, NJ 07962-2245 (US)
(72) Inventor: K, Mallikarjun Bhimashankar, Morristown, NJ New Jersey 07962-2245 (US); Behara, Dilip Kumar, Morristown, NJ New Jersey 07962-2245 (US); Jayaprakash, Ravindra, Morristown, NJ New Jersey 07962-2245 (US)
(74) Representative: Houghton, Mark Phillip

(57) **Abstract**

A system and method are providing for providing an aircraft with adequate clearance over an obstacle in the aircraft's takeoff departure path. The correct rate-of-climb to clear the obstacle is determined in a processor; for example a TOLD system. The result is then rendered on a display for viewing prior to takeoff.

## Description

### TECHNICAL FIELD

Embodiments disclosed herein relate generally to avionics display systems and, more particularly, to a system and method for displaying rate-of-climb on a vertical speed indicator.

### BACKGROUND

Runways with obstacles in their departure paths may be challenging because steep rates of climb may be necessary to clear the obstacles. Pilots may not be aware of the climb gradients or how to calculate the rate-of-climb. While current display systems do show the vertical speed on, for example, the Vertical Speed Indicator (VSI) of a Primary Flight Display (PFD), they do not show the target rate-of-climb that must be achieved by the aircraft in order to safely clear the obstacles in the path of the departing aircraft during takeoff.

In view of the foregoing, it would be desirable to provide a system and method for displaying the required rate-of-climb on, for example, the VSI on a PFD, during the takeoff phase of a flight, thus reducing pilot workload by eliminating the necessity to refer to various charts and tables and then calculating the target rate-of-climb.

### BRIEF SUMMARY

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

In accordance with the foregoing, there is provided a method for enhancing situational awareness onboard an aircraft during a takeoff procedure comprising rendering on a display a rate-of-climb suitable for avoiding an obstacle in the takeoff path of an aircraft.

A flight deck display system is also provided in accordance with a further embodiment. It comprises a source of data related to an obstacle in an aircraft's departure path , a display system, and a processor coupled to the source of data and to the display system and configured to render on the display a rate-of-climb adequate to avoid the obstacle.

In accordance with a still further embodiment, there is provided a method for providing an aircraft with adequate clearance over an obstacle in the aircraft's takeoff departure path, comprising determining in a processor the correct rate-of-climb to clear the obstacle, rendering the rate-of-climb on a display for viewing prior to takeoff,

### BRIEF DESCRIPTION OF THE DRAWINGS

FIG. 1 is a block diagram of an exemplary embodiment of an aircraft display system;
FIG. 2 is a diagram illustrating a runway, an aircraft, an obstacle, and the parameters that must be considered during takeoff to avoid the obstacle;
FIG. 3 is a graphical representation of a vertical speed indicator having a target rate-of-climb rendered thereon; and
FIG. 4 is a flow-chart illustrating a method for displaying the target rate-of-climb in accordance with an embodiment.

### DETAILED DESCRIPTION

The following detailed description is merely exemplary in nature and is not intended to limit the subject matter of the application and uses thereof. Furthermore, there is no intention to be bound by any theory presented in the preceding background or the following detailed description. Presented herein for purposes of explication is a certain exemplary embodiment of how a rate-of-climb, suitable for avoiding an obstacle in the takeoff path of an aircraft, may be displayed onboard the aircraft. As such, the examples presented herein are intended as non-limiting.

Techniques and technologies may be described herein in terms of functional and/or logical block components and with reference to symbolic representations of operations, processing tasks, and functions that may be performed by various computing components or devices. It should be appreciated that any number of hardware, software, and/or firmware components configured to perform the specified functions may realize the various block components shown in the figures. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

The following description may refer to elements or nodes or features being "coupled" together. As used herein, unless expressly stated otherwise, "coupled" means that one element/node/feature is directly or indirectly joined to (or directly or indirectly communicates with) another element/node/feature, and not necessarily mechanically. Thus, although the drawings may depict one exemplary arrangement of elements, additional intervening elements, devices, features, or components may be present in an embodiment of the depicted subject matter. In addition, certain terminology may also be used in the following description for the purpose of reference only, and thus are not intended to be limiting.

The system and methods described herein can be deployed with vehicles, such as aircraft, spacecraft, and the like. The preferred embodiments of the system and methods described herein represent an intelligent way to present visual airport information related to runway obstacles in the departure path to a pilot or flight crew during operation of the aircraft and, in particular, during takeoff.

For the sake of brevity, conventional techniques related to graphics and image processing, navigation, flight planning, aircraft controls, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

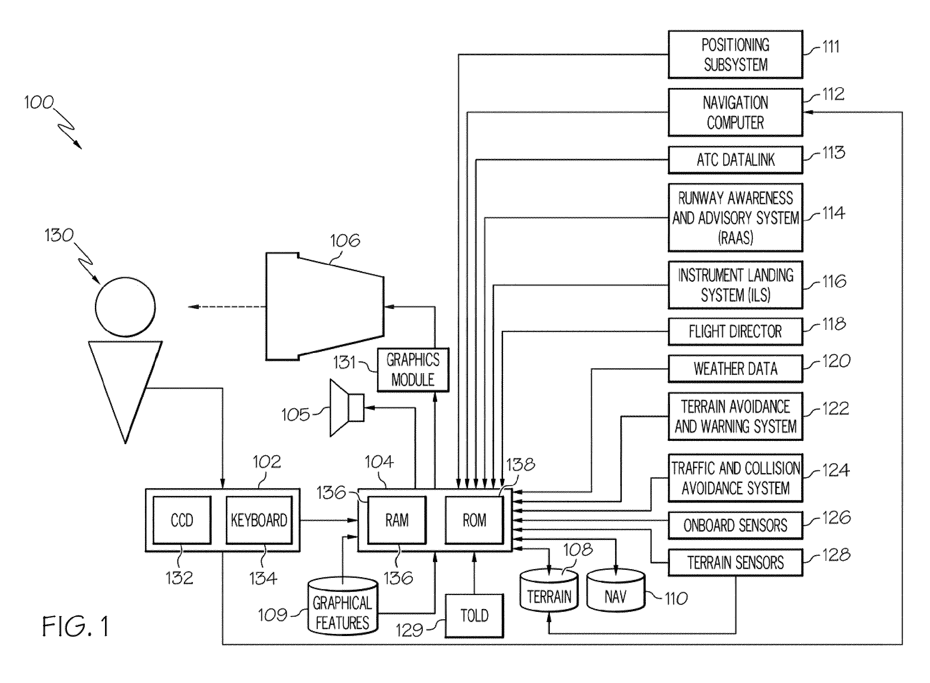

Turning now to the drawings, FIG. 1 depicts an exemplary flight deck display system **100** (suitable for a vehicle such as an aircraft) that generally includes, without limitation: a user interface **102;** a processor architecture **104** coupled to the user interface **102;** an aural annunciator **105;** and a display element **106** coupled to the processor architecture **104.** The system **100** may also include, cooperate with, and/or communicate with a number of databases, sources of data, or the like. Moreover, the system **100** may include, cooperate with, and/or communicate with a number of external subsystems as described in more detail below. For example, the processor architecture **104** may cooperate with one or more of the following components, features, data sources, and subsystems, without limitation: one or more terrain databases **108;** one or more graphical features databases **109;** one or more navigation databases **110;** a positioning subsystem **111;** a navigation computer **112;** an air traffic control (ATC) data link subsystem **113;** a runway awareness and advisory system (RAAS) **114;** an instrument landing system (ILS) **116;** a flight director **118;** a source of weather data **120;** a terrain avoidance and warning system (TAWS) 122; a traffic and collision avoidance system (TCAS) **124;** one or more onboard sensors **126;** one or more terrain sensors **128;** and takeoff and landing data **129.**

The user interface **102** is in operable communication with the processor architecture **104** and is configured to receive input from a user **130** (e.g., a pilot) and, in response to the user input, supply command signals to the processor architecture **104.** The user interface **102** may be any one, or combination, of various known user interface devices including, but not limited to, a cursor control device (CCD) 132, such as a mouse, a trackball, or joystick, one or more buttons, switches, or knobs. In the depicted embodiment, the user interface **102** includes the CCD **132** and a keyboard **134.** The user **130** manipulates the CCD **132** to, among other things, move cursor symbols that might be rendered at various times on the display element **106,** and the user **130** may manipulate the keyboard **134** to, among other things, input textual data. As depicted in FIG. 1, the user interface **102** may also be utilized to enable user interaction with the navigation computer **112,** the flight management system, and/or other features and components of the aircraft.

The processor architecture **104** may utilize one or more known general-purpose microprocessors or an application specific processor that operates in response to program instructions. In the depicted embodiment, the processor architecture **104** includes or communicates with onboard RAM (random access memory) **136,** and onboard ROM (read only memory) **138.** The program instructions that control the processor architecture **104** may be stored in either or both the RAM **136** and the ROM **138.** For example, the operating system software may be stored in the ROM **138,** whereas various operating mode software routines and various operational parameters may be stored in the RAM **136.** It will be appreciated that this is merely exemplary of one scheme for storing operating system software and software routines, and that various other storage schemes may be implemented. It will also be appreciated that the processor architecture **104** may be implemented using various other circuits, not just a programmable processor. For example, digital logic circuits and analog signal processing circuits could also be used.

The processor architecture **104** is in operable communication with the terrain database **108,** the graphical features database **109,** the navigation database **110,** and the display element **106,** and is coupled to receive various types of data, information, commands, signals, etc., from the various sensors, data sources, instruments, and subsystems described herein. For example, the processor architecture **104** may be suitably configured to obtain and process real-time aircraft status data (e.g., avionics-related data) as needed to generate a graphical synthetic perspective representation of terrain in a primary display region. The aircraft status or flight data may also be utilized to influence the manner in which graphical features (associated with the data maintained in the graphical features database **109)** of a location of interest such as an airport are rendered during operation of the aircraft. For the exemplary embodiments described here, the graphical features database **109** may be considered to be a source of airport feature data that is associated with synthetic graphical representations of one or more airport fields.

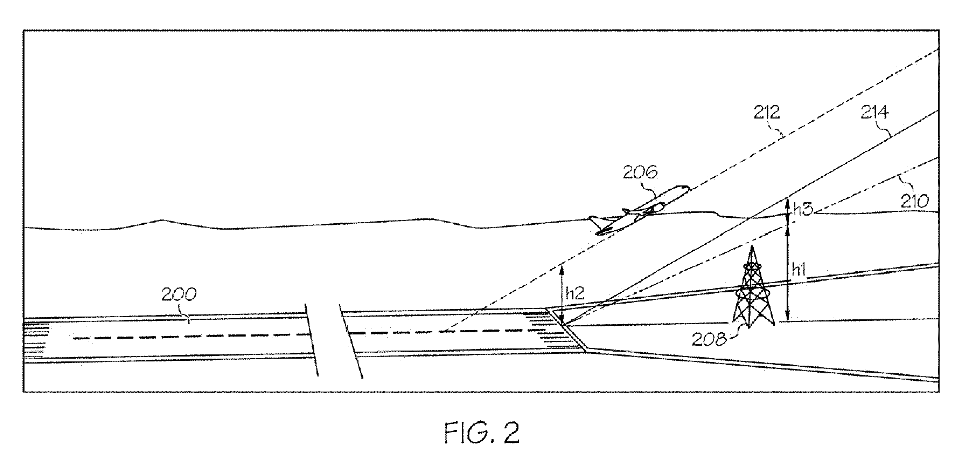

For this embodiment, the graphical features database **109** is an onboard database that contains pre-loaded airport feature data including geo-referenced runway features such as runway obstacles. In alternate embodiments, some or all of the airport feature data can be loaded into the graphical features database **109** during flight. Indeed, some airport feature data could be received by the aircraft in a dynamic manner as needed. The airport feature data accessed by the processor architecture **104** is indicative of displayable visual features of one or more airports of interest. In practice, the airport feature data can be associated with any viewable portion, aspect, marking, structure, building, geography, and/or landscaping located at, on, in, or near an airport including any obstacles that may require special takeoff parameters. Depending on the particular airport field, the airport feature could be related to any of the following obstacles including, without limitation, buildings, mountains, structures, towers, light poles power lines, telephone poles, antennas, and the like, in the takeoff path of an aircraft located at or near the airport. The processing and rendering of the airport feature data will be described in more detail below in connection with FIGS. 2-4.

In certain embodiments, the processor architecture **104** is configured to respond to inertial data obtained by the onboard sensors **126** to selectively retrieve terrain data from the terrain database **108** or the terrain sensor **128,** to selectively retrieve navigation data from the navigation database **110,** and/or to selectively retrieve graphical features data from the graphical features database **109,** where the graphical features data corresponds to the location or target of interest. The processor architecture **104** can also supply appropriate display commands (e.g., image rendering display commands) to the display element **106,** so that the retrieved terrain, navigation, and graphical features data are appropriately displayed on the display element **106.** Processor architecture **104** also provides appropriate commands to aural annunciator **105** (e.g. aural alert generating commands. The processor architecture **104** may be further configured to receive real-time (or virtually real-time) airspeed, altitude, attitude, waypoint, and/or geographic position data for the aircraft and, based upon that data, generate image rendering display commands associated with the display of terrain.

The display element **106** is used to display various images and data, in both a graphical and a textual format, and to supply visual feedback to the user **130** in response to the user input commands supplied by the user **130** to the user interface **102.** It will be appreciated that the display element **106** may be any one of numerous known displays suitable for rendering image and/or text data in a format viewable by the user **130.** Non-limiting examples of such displays include various cathode ray tube (CRT) displays, and various flat panel displays such as, various types of LCD (liquid crystal display), OLED, and TFT (thin film transistor) displays. The display element **106** may additionally be based on a panel mounted display, a HUD projection, or any known technology. In an exemplary embodiment, the display element **106** includes a panel display, and the display element **106** is suitably configured to receive image rendering display commands from the processor architecture **104** and, in response thereto, the display element **106** renders a synthetic graphical display having a perspective view corresponding to a flight deck viewpoint. In certain situations, the display element **106** receives appropriate image rendering display commands and, in response thereto, renders a synthetic representation of an airport field. The graphically rendered airport field might include conformal graphical representations of taxiways, runways, and signage rendered on the taxiways. To provide a more complete description of the operating method that is implemented by the flight deck display system **100,** a general description of exemplary displays and various graphical features rendered thereon will be provided below with reference to FIGS. 2-4.

As FIG. 1 shows, the processor architecture **104** is in operable communication with the source of weather data **120,** the TAWS **122,** and the TCAS **124,** and is additionally configured to generate, format, and supply appropriate display commands to the display element **106** so that the avionics data, the weather data **120,** data from the TAWS **122,** data from the TCAS **124,** and data from the previously mentioned external systems may also be selectively rendered in graphical form on the display element **106.** The data from the TCAS **124** can include Automatic Dependent Surveillance Broadcast (ADS-B) messages.

The terrain database **108** includes various types of data, including elevation data, representative of the terrain over which the aircraft is flying. The terrain data can be used to generate a three dimensional perspective view of terrain in a manner that appears conformal to the earth. In other words, the display emulates a realistic view of the terrain from the flight deck or cockpit perspective. The data in the terrain database **108** can be pre-loaded by external data sources or provided in real-time by the terrain sensor **128.** The terrain sensor **128** provides real-time terrain data to the processor architecture **104** and/or the terrain database **108.** In one embodiment, terrain data from the terrain sensor **128** is used to populate all or part of the terrain database **108,** while in another embodiment, the terrain sensor **128** provides information directly, or through components other than the terrain database 108, to the processor architecture **104.**

In another embodiment, the terrain sensor **128** can include visible, low-light TV, infrared, or radar-type sensors that collect and/or process terrain data. For example, the terrain sensor **128** can be a radar sensor that transmits radar pulses and receives reflected echoes, which can be amplified to generate a radar signal. The radar signals can then be processed to generate three-dimensional orthogonal coordinate information having a horizontal coordinate, vertical coordinate, and depth or elevation coordinate. The coordinate information can be stored in the terrain database **108** or processed for display on the display element **106.**

In one embodiment, the terrain data provided to the processor architecture **104** is a combination of data from the terrain database **108** and the terrain sensor **128.** For example, the processor architecture **104** can be programmed to retrieve certain types of terrain data from the terrain database **108** and other certain types of terrain data from the terrain sensor **128.** In one embodiment, terrain data retrieved from the terrain sensor **128** can include moveable terrain, such as mobile buildings and systems. This type of terrain data is better suited for the terrain sensor **128** to provide the most up-to-date data available. For example, types of information such as water-body information and geopolitical boundaries can be provided by the terrain database **108.** When the terrain sensor **128** detects, for example, a water-body, the existence of such can be confirmed by the terrain database **108** and rendered in a particular color such as blue by the processor architecture **104.**

The navigation database **110** includes various types of navigation-related data stored therein. In preferred embodiments, the navigation database **110** is an onboard database that is carried by the aircraft. The navigation-related data include various flight plan related data such as, for example, and without limitation: waypoint location data for geographical waypoints; distances between waypoints; track between waypoints; data related to different airports; navigational aids; obstructions; special use airspace; political boundaries; communication frequencies; and aircraft approach information. In one embodiment, combinations of navigation-related data and terrain data can be displayed. For example, terrain data gathered by the terrain sensor **128** and/or the terrain database **108** can be displayed with navigation data such as waypoints, airports, etc. from the navigation database **110,** superimposed thereon.

Although the terrain database **108,** the graphical features database **109,** and the navigation database **110** are, for clarity and convenience, shown as being stored separate from the processor architecture **104,** all or portions of these databases **108, 109, 110** could be loaded into the onboard RAM **136,** stored in the ROM **138,** or integrally formed as part of the processor architecture **104.** The terrain database **108,** the graphical features database 109, and the navigation database **110** could also be part of a device or system that is physically separate from the system **100.**

The positioning subsystem **111** is suitably configured to obtain geographic position data for the aircraft. In this regard, the positioning subsystem **111** may be considered to be a source of geographic position data for the aircraft. In practice, the positioning subsystem **111** monitors the current geographic position of the aircraft in real-time, and the real-time geographic position data can be used by one or more other subsystems, processing modules, or equipment on the aircraft (e.g., the navigation computer **112,** the RAAS **114,** the ILS **116,** the flight director **118,** the TAWS **122,** or the TCAS **124).** In certain embodiments, the positioning subsystem **111** is realized using global positioning system (GPS) technologies that are commonly deployed in avionics applications. Thus, the geographic position data obtained by the positioning subsystem **111** may represent the latitude and longitude of the aircraft in an ongoing and continuously updated manner.

The avionics data that is supplied from the onboard sensors **126** includes data representative of the state of the aircraft such as, for example, aircraft speed, altitude, attitude (i.e., pitch and roll), heading, groundspeed, turn rate, etc. In this regard, one or more of the onboard sensors **126** may be considered to be a source of heading data for the aircraft. The onboard sensors **126** can include MEMS-based, ADHRS-related or any other type of inertial sensor. As understood by those familiar with avionics instruments, the aircraft status data is preferably updated in a continuous and ongoing manner.

The weather data **120** supplied to the processor architecture **104** is representative of at least the location and type of various weather cells. The data supplied from the TCAS **124** includes data representative of other aircraft in the vicinity, which may include, for example, speed, direction, altitude, and altitude trend. In certain embodiments, the processor architecture **104,** in response to the TCAS data, supplies appropriate display commands to the display element **106** such that a graphic representation of each aircraft in the vicinity is displayed on the display element **106.** The TAWS **122** supplies data representative of the location of terrain that may be a threat to the aircraft. The processor architecture **104,** in response to the TAWS data, preferably supplies appropriate display commands to the display element **106** such that the potential threat terrain is displayed in various colors depending on the level of threat. For example, red is used for warnings (immediate danger), yellow is used for cautions (possible danger), and green is used for terrain that is not a threat. It will be appreciated that these colors and number of threat levels are merely exemplary, and that other colors and different numbers of threat levels can be provided as a matter of choice.

As was previously alluded to, one or more other external systems (or subsystems) may also provide avionics-related data to the processor architecture **104** for display on the display element **106.** In the depicted embodiment, these external systems include a flight director **118,** an instrument landing system (ILS) **116,** runway awareness and advisory system (RAAS) **114,** and navigation computer **112.** The flight director **118,** as is generally known, supplies command data representative of commands for piloting the aircraft in response to flight crew entered data, or various inertial and avionics data received from external systems. The command data supplied by the flight director **118** may be supplied to the processor architecture **104** and displayed on the display element **106** for use by the user **130,** or the data may be supplied to an autopilot (not illustrated). The autopilot, in turn, produces appropriate control signals that cause the aircraft to fly in accordance with the flight crew entered data, or the inertial and avionics data.

The ILS **116** is a radio navigation system that provides the aircraft with horizontal and vertical guidance just before and during landing and, at certain fixed points, indicates the distance to the reference point of landing. The system includes ground-based transmitters (not shown) that transmit radio frequency signals. The ILS **116** onboard the aircraft receives these signals and supplies appropriate data to the processor for display.

The RAAS **114** provides improved situational awareness to help lower the probability of runway incursions by providing timely aural advisories to the flight crew during taxi, takeoff, final approach, landing and rollout. The RAAS **114** uses GPS data to determine aircraft position and compares aircraft position to airport location data stored in the navigation database **110** and/or in the graphical features database **109.** Based on these comparisons, the RAAS **114,** if necessary, issues appropriate aural advisories. Aural advisories, which may be issued by the RAAS **114,** inform the user **130,** among other things of when the aircraft is approaching a runway, either on the ground or from the air at times such as when the aircraft has entered and is aligned with a runway, when the runway is not long enough for the particular aircraft, the distance remaining to the end of the runway as the aircraft is landing or during a rejected takeoff, when the user **130** inadvertently begins to take off from a taxiway, and when an aircraft has been immobile on a runway for an extended time. During approach, data from sources such as GPS, including RNP and RNAV, can also be considered.

The navigation computer **112** is used, among other things, to allow the user **130** to program a flight plan from one destination to another. The navigation computer **112** may be in operable communication with the flight director **118.** As was mentioned above, the flight director **118** may be used to automatically fly, or assist the user **130** in flying, the programmed route. The navigation computer **112** is in operable communication with various databases including, for example, the terrain database **108** and the navigation database **110.** The processor architecture **104** may receive the programmed flight plan data from the navigation computer **112** and cause the programmed flight plan, or at least portions thereof, to be displayed on the display element **106**.

The ATC datalink subsystem **113** is utilized to provide air traffic control data to the system **100,** preferably in compliance with known standards and specifications. Using the ATC datalink subsystem **113,** the processor architecture **104** can receive air traffic control data from ground based air traffic controller stations and equipment. In turn, the system **100** can utilize such air traffic control data as needed. For example, taxi maneuver clearance may be provided by an air traffic controller using the ATC datalink subsystem **113.**

In operation, a flight deck display system as described herein is suitably configured to process the current real-time geographic position data, the current real-time heading data, the airport feature data, and possibly other data to generate image rendering display commands for the display element **106.** Thus, the synthetic graphical representation of an airport field rendered by the flight deck display system will be based upon or otherwise influenced by at least the geographic position and heading data and the airport feature data.

Takeoff and Landing Data (TOLD) system **129** is coupled to processor **104** and computes the V-speeds for takeoff and landing, where V1 is the Go/No Go speed, VR is the rotation speed, V2 is the takeoff safety speed, VAPP is the approach speed, and VREF is the takeoff reference speed. These are typically depicted on the airspeed tape of the PFD, but the rate-of-climb required for takeoff is not. As will be further described below, the TOLD system does provide a climb gradient for a particular runway that may then be converted to the rate-of-climb.

Instrument departure procedures have been developed, the primary purpose of which is to provide obstacle clearance. Runways that have obstacles in their departure path are particularly challenging during takeoff due to the steep rate-of-climb that must be achieved to avoid the obstacle. LaGuardia Airport in New York City is one of the more challenging due to the many obstacles in the departure paths. These departure procedures must be carefully reviewed by a pilot in order to identify the rate-of-climb necessary for obstacle clearance. This adds considerably to pilot workload adding to the challenge, especially when climbing at night or during instrument meteorological conditions.

The departure procedure usually contains ceiling and visibility requirements. For example, the runway (Rwy) 1L/1R of KLAS - Las Vegas - MCCARRAN INTL Departure Procedure indicates a ceiling of 1200 feet, a visibility of three miles, and a minimum climb rate of 410 feet per nautical mile (NM) to 5000 feet. The minimum climb of 410 feet/NM is required because of an obstacle at 3189 feet Mean Sea Level (MSL) at 2.93 NM North. This can be in the departure procedure for KLAS or provided by the TOLD system.

FIG. 2 illustrates a runway **200** having a departure end **202** and is useful for describing (1) the design criteria associated with an example departure procedure; and (2) the goal of displaying the rate-of-climb in accordance with an embodiment. Also shown in FIG. 2 is an aircraft **206** taking off from runway **200** along a climb path over an obstacle **208.** As can be seen, the Obstacle Clear Surface (OCS) is represented by line **210** at an altitude of h1 (e.g. 152 feet) and at a distance of one nautical mile from the departure end **202** of the runway **200.** Obstacle clearance is based on the assumption that aircraft **206** crosses the departure end **202** of the runway at a predetermined altitude h2 (e.g. 35 feet) and climb at a predetermined V1 (e.g. 200 feet) per nautical mile. This is represented by line **212** in FIG. 2. When obstacles penetrate the OCS, a higher climb gradient is required. For example, in Las Vegas, the departure chart for KLAS dictates a climb rate of 410 feet per nautical mile. Any climb rate exceeding the standard rate-of-climb of 152 feet per nautical mile represents a challenge for pilots. Still referring to FIG. 2, line **214** represents the climb path of aircraft **206** that has crossed the departure end **202** of runway **200** and has a rate-of-climb equal to the required climb gradient of 200 feet per NM passing over obstacle 208 at a height h3 (i.e. 48 feet).

Embodiments described herein dramatically reduce pilot workload associated with high-gradient take-offs requiring obstacle clearances. This is accomplished by eliminating the need to refer to various charts and tables to calculate the necessary rate-of-climb. In accordance with an embodiment, this may be accomplished by graphically displaying a rate-of-climb value required for takeoff on the Vertical Speed Indicator (VSI) scale of, for example, a Primary Flight Display. This, in turn, is accomplished by converting the climb gradient (e.g. generated by a TOLD system **129)** into a rate-of-climb value, and displaying the result on display **106** (FIG. 1), e.g. a Primary Flight Display.

First, a processor **104** or TOLD system **129** generates a climb gradient based on obstacles in the departure path. This may be accomplished using data from a TOLD system 129 (FIG. 1), currently installed on most business, general, and regional aircraft or a processor 104. When a TOLD system is employed, the pilot may input the obstacle distance and obstacle elevation into processor **104** via, for example, user interface **102** or, a page of the multi-functional display unit. Next, the processor 104 or TOLD unit (if used) converts the climb gradient in feet per NM to rate-of-climb in feet per minute. For example, if the aircraft speed is 120 knots and the TOLD system computed climb gradient is 410 feet/NM, then the rate-of-climb is: 410 ft/NM (120 knots) = 410 ft/NM (120 NM/hr) = 410 ft/NM (120 NM/60 min) = 410 ft/m (2) = 820 ft/min. This rate-of-climb is supplied to graphics module **131** which renders, on display **106** (e.g. the VSI scale of a PFD) the required rate-of-climb just prior to takeoff.

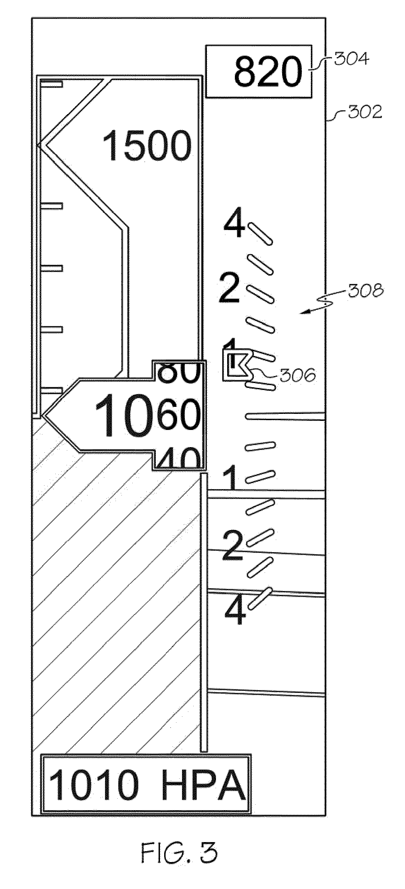

FIG. 3 is a graphical representation of an altimeter **300** and a vertical speed indicator **302.** As can be seen, the altimeter **300** indicates that the aircraft is sitting on the ground at roughly 1,060 feet above sea level. The rate-of-climb determined in accordance with the previous description (e.g. 820 ft/min) is displayed at digital readout **304** and/or as a bug **306** on the vertical speed scale **308.**

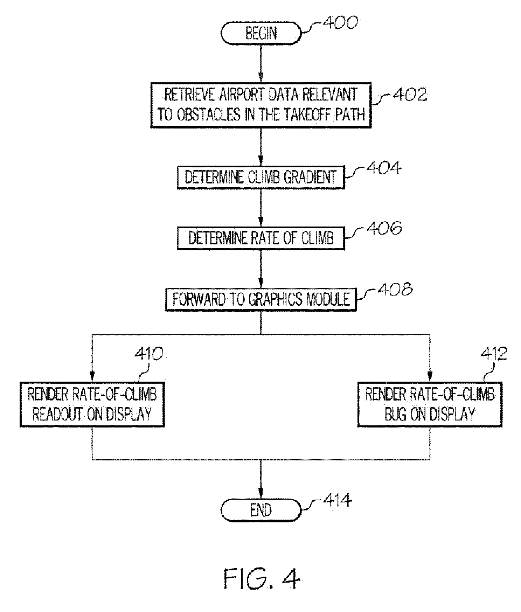

FIG. 4 is a flow chart illustrating a method **400** for displaying the rate-of-climb necessary to clear an obstacle in the departure path of an aircraft prior to takeoff. In **STEP** 402, airport data relating to the obstacle is retrieved from one or more data sources as described previously in connection with FIG.1. Next, the obstacle data is utilized to determine the respective climb gradient **(STEP 404).** This may be accomplished with the use of a TOLD system as above described. Using the climb gradient, a processor determines the rate-of-climb **(STEP 406).** This is forwarded to a graphics module **(131** in FIG. 1) that renders on a display **106** (e.g. the vertical speed indicator) a digital readout of the rate-of-climb and/or a rate-of-climb bug **(STEPS 410** and **412)** respectively.

Thus, there has been provided a system and method for displaying a rate-of-climb on, for example, a vertical speed indicator of a primary flight display during the takeoff phase of a flight that is necessary to avoid an obstacle in the departure path of the aircraft. This reduces pilot workload by eliminating the need to refer to various charts and tables and then calculating the rate-of-climb.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. A method for enhancing situational awareness onboard an aircraft during takeoff procedure comprising rendering on a display a rate-of-climb suitable for avoiding an obstacle in the takeoff path of the aircraft.

2. The method according to Claim 1 further comprising rendering the rate-of-climb on a vertical speed indicator.

3. The method of Claim 2 further comprising rendering the rate-of-climb as a digital readout.

4. The method of Claim 2 further comprising rendering the rate-of-climb as a bug.

5. The method of Claim 2 further comprising determining a climb gradient.

6. The method of Claim 5 wherein the climb gradient is determined by a TOLD system.

7. The method of Claim 6 further comprising determining the rate-of-climb in feet-per-minute.

8. The method of Claim 7 further comprising retrieving airport data relevant to obstacles in the aircraft's departure path.

9. A flight-deck display system, comprising:
a source of data related to an obstacle in an aircraft's departure path;
a display system; and
a processor coupled to the source of data and to the display system and configured to render on the display a rate-of-climb adequate to avoid the obstacle.

10. The system of Claim 9 wherein the display system comprises a vertical speed indicator.
